# EUROPÄISCHE PATENTSCHRIFT

(11) **EP 3 378 118 B1**
(45) Veröffentlichungstag und Bekanntmachung des Hinweises auf die Patenterteilung: **04.12.2019**
(21) Anmeldenummer: 16790879.7
(22) Anmeldetag: 28.10.2016
(51) Int. Cl.: H01M 8/04223, H01M 8/04746, H01M 8/04303, H01M 8/04228, H01M 8/04119

(54) **VERFAHREN ZUM SPÜLEN EINES BRENNSTOFFZELLENSYSTEMS**
METHOD FOR PURGING A FUEL CELL SYSTEM
PROCÉDÉ DE PURGE D'UN SYSTÈME DE PILE À COMBUSTIBLE

(30) Priorität: 19.11.2015 DE 102015015005
(43) Veröffentlichungstag der Anmeldung: 26.09.2018
(73) Patentinhaber: Daimler AG, 70372 Stuttgart (DE)
(72) Erfinder: MIELKE, Sascha, Vancouver, BC V6B 0R4 (CA); PASTOR NIGORRA, Pere Antoni, 72074 Tuebingen (DE); SCHMALZRIEDT, Sven, 73728 Esslingen (DE); USMAN, Muhammad, 73230 Kirchheim (DE)
(74) Vertreter: JENSEN & SON
(86) Internationale Anmeldenummer: PCT/EP2016/001799
(87) Internationale Veröffentlichungsnummer: WO 2017/084736

(56) Entgegenhaltungen:
- DE-A1-102007 026 330
- DE-A1-102013 017 543
- DE-A1-102013 226 820

## Beschreibung

Die Erfindung betrifft ein Verfahren zum Spülen eines Brennstoffzellensystems bei einem Abschaltvorgang nach der im Oberbegriff des Anspruchs 1 näher definierten Art.

Das Spülen von Brennstoffzellensystemen bei der Abschaltung ist prinzipiell bekannt. Hierdurch wird, beispielsweise bei einer Durchspülung der Kathodenseite mit Luft und der Anodenseite mit Luft oder Wasserstoff eine Trocknung der Brennstoffzelle erzielt, sodass diese, wenn die Temperaturen später unter den Gefrierpunkt sinken, nicht oder zumindest nicht so stark einfrieren kann und dementsprechend leichter und schneller wieder zu starten ist. Auch bei Temperaturen oberhalb des Gefrierpunkts hat das Austrocknen der Brennstoffzelle vor dem Wiederstart bzw. beim Abschalten in Anbetracht eines späteren Wiederstarts entscheidende Vorteile, da hierdurch eine Benetzung der aktiven Oberflächen mit auskondensierter Feuchtigkeit und damit ein Blockieren dieser aktiven Oberflächen verhindert wird. Dasselbe gilt für Verteilungskanäle, welche durch Tropfen aus kondensierter Flüssigkeit ebenfalls blockiert werden könnten.

Beispielhaft kann in diesem Zusammenhang auf die DE 10 2007 026 330 B4 verwiesen werden, welche Luft über einen Strömungsverdichter zum Austrocknen der Brennstoffzelle teilweise durch die Brennstoffzelle selbst und teilweise in einem sogenannten Systembypass um die Brennstoffzelle fördert, um immer eine ausreichende Luft zur Verdünnung des anodenseitig abgeblasenen Wasserstoffs zu ermöglichen.

Problematisch kann es nun sein, wenn unerwartet hohe Konzentrationen an Wasserstoff austreten und dabei entsprechend niedrige Volumenströme an Luft vorliegen. In der beschriebenen Schrift ist es so, dass diese Werte fest vorgegeben werden, sodass aus Sicherheitsgründen immer mit einer maximalen Luftmenge gearbeitet werden muss, was hinsichtlich des Energiebedarfs der Luftfördereinrichtung einerseits und hinsichtlich ihrer Lärmemissionen andererseits höchst unerwünscht ist.

In der DE 603 07 595 T2 ist ein Verfahren beschrieben, bei welchem die Luftmenge an die Wasserstoffkonzentration in dem Abgas angepasst wird. Dies erfordert jedoch eine entsprechende Ansteuerung der Luftfördereinrichtung, um immer eine ausreichende Luftmenge entsprechend der erfassten Wasserstoffkonzentration in dem Abgas der Anodenseite zur Verfügung stellen zu können. Insbesondere bei einem Strömungsverdichter ist dies ein entscheidender Nachteil, da dieser aufgrund der typischerweise sehr hohen Drehzahlen und der zum Ändern derselben notwendigen Zeit meist träge in seiner Ansteuerung ist und sich die von ihm geförderte Luftmenge, also die Luftmasse oder Volumenstrom an Luft, nicht sehr dynamisch einstellen lässt. Ein weiterer Nachteil besteht darin, dass die Lärmemissionen bei einer sich in der Drehzahl ständig ändernden Luftfördereinrichtung deutlich höher sind als bei einer konstant laufenden Luftfördereinrichtung wie in der zuvor beschriebenen Schrift, sogar wenn dabei die Drehzahl höher sein muss. Ein weiteres aus dem Stand der Technik bekanntes Brennstoffzellensystem wird in der Druckschrift DE 10 2013 017543 A1 beschrieben.

Die Aufgabe der vorliegenden Erfindung besteht nun darin, ein Verfahren zum Spülen eines Brennstoffzellensystems bei der Abschaltung gemäß dem Oberbegriff des Anspruchs 1 anzugeben, welches die genannten Nachteile vermeidet und die Verfahren gemäß dem Stand der Technik weiter verbessert.

Erfindungsgemäß wird diese Aufgabe durch ein Verfahren mit den Merkmalen im Anspruch 1 gelöst. Vorteilhafte Ausgestaltungen und Weiterbildungen des Verfahrens ergeben sich aus den hiervon abhängigen Unteransprüchen.

Bei dem erfindungsgemäßen Verfahren ist es so, dass das Ablassventil während des Abschaltens zyklisch geschlossen und geöffnet wird. Die Öffnungsdauer hängt dabei von der geförderten Luftmenge ab. Das Ablassventil wird also während der gesamten Abschaltprozedur des Brennstoffzellensystems, während welcher von der Luftfördereinrichtung Luft gefördert wird, zyklisch geöffnet und geschlossen. Dadurch, dass das zyklische Öffnen und Schließen von der geförderten Luftmenge, also beispielsweise einer gemessenen Luftmasse oder eines gemessenen Luftvolumenstroms oder auch einer aus der Drehzahl und/oder der Antriebsleistung der Luftfördereinrichtung abgeschätzten Luftmenge eingestellt wird, kann eine bei der geförderten Luftmenge maximale Öffnungsdauer des Ventils erreicht werden, ohne dass kritische Grenzwerte der Wasserstoffemission überschritten werden. Durch eine Anpassung der Öffnungsdauer des Ablassventils kann also eine zu der entsprechenden Luftmenge passende maximale Öffnungsdauer des Ventils erreicht werden. Hierdurch wird die maximal mögliche Menge an Wasser aus der Anodenseite der Brennstoffzelle ausgetragen.

Ein weiterer entscheidender Vorteil des erfindungsgemäßen Verfahrens besteht darin, dass die Luft, welche über die Luftfördereinrichtung gefördert wird und im Bereich der Abluftleitung die Emissionen von der Anodenseite entsprechend verdünnt, zuvor durch die Kathodenseite der Brennstoffzelle geströmt ist und diese ebenfalls austrocknet, sodass der gesamte Aufbau der Brennstoffzelle während der Abschaltprozedur sicher und zuverlässig getrocknet wird.

Gleichzeitig wird sichergestellt, dass nach dem Abschaltvorgang eine möglichst hohe Wasserstoffkonzentration im Bereich der Anodenseite der Brennstoffzelle vorliegt, da durch das geöffnete Ventil auch Inertgase mit abgeblasen werden. Eine solche möglichst hohe Wasserstoffkonzentration auf der Anodenseite ist für das später abgestellte System von entscheidendem Vorteil, weil ein Wiederstart des Brennstoffzellensystems bei vorhandenem Wasserstoff auf der Anodenseite sehr viel schonender für die Brennstoffzelle ist, als wenn Sauerstoff aus der Luft auf der Anodenseite vorliegen würden. Die sogenannte H2-Protection-Time wird damit verlängert.

Um dies möglichst gut zu erreichen, ist es dabei gemäß einer vorteilhaften Weiterbildung der Idee vorgesehen, dass bei größerer Luftmenge die Öffnungsdauer verlängert und bei kleinerer Luftmenge entsprechend verkürzt wird, um im Mittel jeweils eine ausreichende Verdünnung des typischerweise auf der Anodenseite mit abgelassenen Wasserstoffs zu erzielen.

Gemäß des erfindungsgemäßen Verfahrens ist es ferner vorgesehen, dass die geförderte Luft zumindest teilweise durch einen Systembypass von der Druckseite der Luftfördereinrichtung direkt zu der Saugseite der Turbine in die Abluftleitung gefördert wird. Ein solcher Einsatz eines typischerweise ohnehin vorhandenen Systempasses reduziert die Luftmenge, welche durch die Kathodenseite der Brennstoffzelle strömen muss, sowie die Luftmenge, welche gegebenenfalls durch weitere Aufbauten wie Befeuchter und dgl. strömt. Hierdurch werden die Druckverluste und damit der Energieaufwand zur Bereitstellung der Luft während der Abschaltprozedur reduziert. Durch eine geeignete Stellung einer Ventileinrichtung im Systembypass kann dabei sichergestellt werden, dass einerseits eine ausreichende Luftmenge zur Trocknung durch die Kathodenseite und gegebenenfalls den Befeuchter strömt, und dass andererseits eine ausreichende Luftmenge zur Verdünnung eventueller Wasserstoffemissionen in der Abluftleitung zur Verfügung steht.

Ein weiterer Vorteil der Verringerung der Luftmenge, welche durch die Kathodenseite der Brennstoffzelle geleitet wird, liegt darin, dass während der Abschaltprozedur typischerweise die Spannung der Einzelzellen beschränkt wird. Dies macht es notwendig, dass der Brennstoffzelle weiterhin eine gewisse Last entnommen wird. Durch die Beschränkung der Spannung der Einzelzellen kann die Korrosion innerhalb der Zellen reduziert werden, was sich positiv auf die Lebensdauer der Brennstoffzelle auswirkt. Je größer die Luftmenge in der Kathodenseite ist, desto größer muss die Belastung der Brennstoffzelle mit einer geeigneten elektrischen Last ausfallen. Gleichzeitig wird mit zunehmender Belastung der Brennstoffzelle jedoch neues Wasser produziert, was dem Wunsch nach einer Trocknung der Brennstoffzelle entgegenläuft. Durch die Reduzierung der durch die Kathodenseite geleiteten Luftmasse durch den Systembypass kann diese Problematik entschärft werden.

Gemäß einer weiteren sehr günstigen Ausgestaltung des erfindungsgemäßen Verfahrens kann es nun außerdem vorgesehen sein, dass die Luftfördereinrichtung mit konstanter Drehzahl betrieben wird. insbesondere ein solcher Einsatz der Luftfördereinrichtung mit einem Betrieb mit konstanter Drehzahl, wobei gemäß der oben beschriebenen vorteilhaften Weiterbildung bei Bedarf die Luftmenge durch die Kathode über den Systembypass angepasst werden kann, ermöglicht eine deutliche Reduzierung der störenden Schallemissionen sowie der Vibrationen, welche durch die Luftfördereinrichtung verursacht werden. Der konstante Betrieb bei einer vorgegebenen Drehzahl läuft nämlich sehr viel ruhiger und vibrationsärmer ab, als es eine ständige Regelung der Drehzahl der Luftfördereinrichtung täte. Außerdem kann eine Schalldämpfer bei einer kostanten Drehzahl ideal auf diese ausgelegt werden, so dass die Lärmemissionen minmiert sind. Gleichzeitig wird durch den konstanten Betrieb gegenüber einem dynamisch wechselnden Betrieb der Energiebedarf der Luftfördereinrichtung verringert.

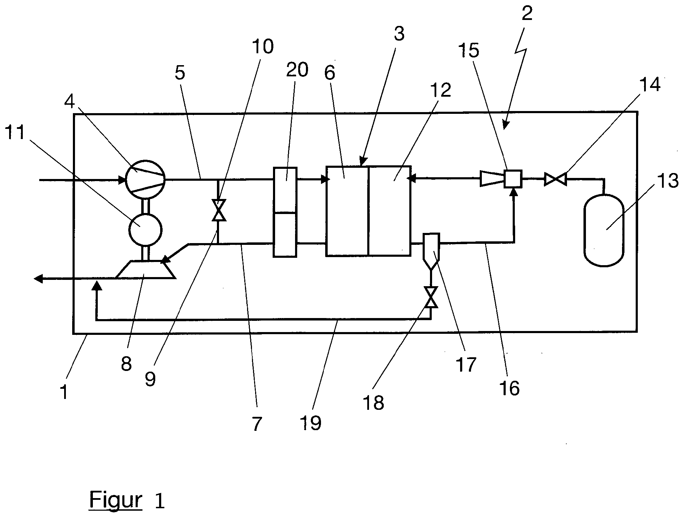

Weitere vorteilhafte Ausgestaltungen des Verfahrens und des Brennstoffzellensystems ergeben sich aus den restlichen abhängigen Unteransprüchen und werden anhand eines Ausführungsbeispiels deutlich, welches nachfolgend unter Bezugnahme auf die Figur näher dargestellt ist.

Die einzige beigefügte Figur zeigt ein prinzipmäßig angedeutetes Brennstoffzellensystem zur Durchführung des erfindungsgemäßen Verfahrens in einem Fahrzeug.

In der einzigen beigefügten Figur ist ein Fahrzeug 1 prinzipmäßig angedeutet. In dem Fahrzeug 1 befindet sich ein Brennstoffzellensystem 2, welches zur Bereitstellung von elektrischer Antriebsleistung für das Fahrzeug 1 genutzt werden soll. Den Kern des Brennstoffzellensystems 2 bildet dabei eine mit 3 bezeichnete Brennstoffzelle, welche als Stapel von Einzelzellen beispielsweise in PEM-Technologie aufgebaut sein soll. Dieser Brennstoffzelle 3 wird über eine Luftfördereinrichtung 4, welche vorzugsweise als Strömungsverdichter ausgebildet sein kann, Luft über eine Zuluftleitung 5 zugeführt. Die Luft gelangt in einen Kathodenraum 6 der Brennstoffzelle 3, welcher innerhalb der Brennstoffzelle 3 beispielhaft angedeutet ist. Über eine Abluftleitung 7 gelangt die Abluft dann in dem hier dargestellten Ausführungsbeispiel zu einer mit 8 bezeichneten Abluftturbine und von dort in die Umgebung. Zwischen der Zuluftleitung und der Abluftleitung kann dabei ein Gas/Gas-Befeuchter 20 in an sich bekannter Art und Weise angeordnet sein. Die heiße und trockene Zuluft in der Zuluftleitung 5 wird in diesem Befeuchter 20 durch die feuchte Abluft in der Abluftleitung 7 befeuchtet. Die Zuluftleitung 5 lässt sich außerdem mit der Abluftleitung 7 über eine Bypassleitung 9 mit einem Bypassventil 10 verbinden. Dieser Aufbau aus Bypassleitung 9 und Bypassventil 10 wird auch als Systembypass bezeichnet und ist so aus dem Stand der Technik ebenfalls grundlegend bekannt.

Die Luftfördereinrichtung 4 ist in dem hier dargestellten Ausführungsbeispiel über eine gemeinsame Welle mit der Abluftturbine 8 und einer elektrischen Maschine 11 verbunden. Dieser Aufbau wird auch als elektrischer Turbolader (ETC) oder motorunterstützter Turbolader bezeichnet. Die Funktionalität ist die, dass die Luftfördereinrichtung 4 die Luft als Sauerstofflieferant für die Brennstoffzelle 3 zur Verfügung stellt. Bei vorliegender Abluft in der Abluftleitung 7 kann durch ein Entspannen der Abluft in der Abluftturbine 8 ein Teil der Energie aus der Abluft zurückgewonnen werden. Diese kann zum Antrieb der Luftfördereinrichtung 4 unterstützend verwendet werden. Die restliche notwendige Antriebsleistung liefert typischerweise die elektrische Maschine 11. Kommt es in bestimmten Situationen dazu, dass im Bereich der Abluftturbine 8 mehr Leistung zurückgewonnen wird als von der Luftfördereinrichtung 4 benötigt wird, dann kann die elektrische Maschine 11 auch generatorisch betrieben werden.

Die Anodenseite der Brennstoffzelle 3 mit einem angedeuteten Anodenraum 12 wird mit Wasserstoff versorgt. Dieser stammt in dem hier dargestellten Ausführungsbeispiel aus einem mit 13 bezeichneten Druckgasspeicher und wird über ein Regel- und Dosierventil 14 sowie eine später noch näher erläuterte Gasstrahlpumpe 15 dem Anodenraum 12 zugeführt. Nicht verbrauchter Restwasserstoff gelangt zusammen mit inerten Gasen, welche in dem gespeicherten Wasserstoff vorhanden waren oder welche vom Kathodenraum 6 in den Anodenraum 12 diffundiert sind, sowie zusammen mit entstandenem Produktwasser aus dem Kathodenraum 12 über eine Rezirkulationsleitung 16 zurück zu der Gasstrahlpumpe 15. In der Gasstrahlpumpe 15 sorgt der frische über das Dosierventil 14 zugeführte Wasserstoff dafür, dass durch Unterdruckeffekte und durch Impulsaustausch das Gasgemisch in der Rezirkulationsleitung 16 angesaugt und vermischt mit dem frischen Wasserstoff wieder zurück zum Anodenraum 12 gefördert wird. Dieser Aufbau ist soweit ebenfalls aus dem Stand der Technik bekannt und wird als Anodenkreislauf bezeichnet.

In der Rezirkulationsleitung 16, und hier insbesondere an der im bestimmungsgemäßen Einsatz tiefsten Stelle der Anodenseite des Brennstoffzellensystems 2 befindet sich ein mit 17 bezeichneter Wasserabscheider. Dieser Wasserabscheider dient dazu, flüssiges Wasser aus dem in der Rezirkulationsleitung 16 strömenden Gasstrom abzuscheiden und zu sammeln. Während des regulären Betriebs des Brennstoffzellensystems 2 wird dieses Wasser von Zeit zu Zeit durch ein Öffnen eines Ablassventils 18 über eine Ablassleitung 19 abgelassen. Da immer auch eine gewisse Menge an Wasserstoff und inerten Gasen mit abgelassen werden, mündet die Ablassleitung 19 in die Abluftleitung 7. Sie kann dabei vor oder nach der Abluftturbine 8 in die Abluftleitung 7 münden. Um die Abluftturbine 8 vor Tröpfchen, welche die schnell laufende Turbine sehr leicht beschädigen könnten, zu schützen, kann sie in idealer Weise, so wie es in dem Ausführungsbeispiel auch dargestellt ist, in Strömungsrichtung der Abluft nach der Abluftturbine 8 in die Abluftleitung 7 münden. Ferner könnte in der Abluftleitung 7 ein weiterer Wasserabscheider in Strömungsrichtung der Abluft vor der Abluftturbine 8 vorgesehen sein. Dieser ist dem Fachmann jedoch allgemein bekannt, sodass auf eine Darstellung entsprechend verzichtet worden ist.

Nach dem Abschluss des regulären Betriebs des Brennstoffzellensystems 2, also insbesondere wenn ein Fahrer des Fahrzeugs 1 dieses Fahrzeug abstellt, dann wird die Brennstoffzelle beim Abschalten über einen sogenannten Abschaltvorgang bzw. Shut-Down-Prozedur in einen definierten Zustand für einen späteren Wiederstart gebracht. Da bei Temperaturen unterhalb des Gefrierpunkts auskondensiertes Wasser in der Brennstoffzelle 3 einfrieren kann, und da auskondensiertes Wasser in der Brennstoffzelle für die Funktionalität der Brennstoffzelle wichtige Bereiche wie beispielsweise aktive Oberflächen, Gasführungskanäle und dgl. benetzen und damit blockieren könnte, wird als Teil der Abschaltprozedur typischerweise auch eine Trocknung der Brennstoffzelle 3 sowie der Peripherie der Brennstoffzelle 3 vorgenommen. Dies erfolgt dadurch, dass in idealer Weise die Luftfördereinrichtung 4 mit einer konstanten Drehzahl betrieben wird und damit einen entsprechenden Luftmassenstrom zur Verfügung stellt. Dieser Luftmassenstrom wird nun bei leicht geöffnetem Systembypassventil 14 zum Teil durch den Befeuchter 20 und den Kathodenraum 6 geleitet und gelangt zum anderen Teil durch die Systembypassleitung direkt von der Zuluftleitung 5 in die Abluftleitung 7. Im Bereich der Abluftturbine 8 und nach der Abluftturbine steht dann der gesamte geförderte Luftstrom mit seiner gesamten Luftmasse zur Verfügung, um in die Umgebung abgegeben zu werden. Bei diesem Vorgang wird durch die Luft, welche durch den Befeuchter 20 und den Kathodenraum 6 der Brennstoffzelle 3 strömt, der Kathodenraum 6 der Brennstoffzelle 3 und der Befeuchter 20 sowie die Zuluftleitung und die Abluftleitung entsprechend ausgetrocknet, um so die Gefahr einer Auskondensation von Flüssigkeit und insbesondere eines späteren Einfrierens dieser Flüssigkeit sicher und zuverlässig auszuschließen.

Die Anodenseite des Brennstoffzellensystems 2 wird ebenfalls durchspült. Hierfür wird das Druckregel- und Dosierventil 14 zumindest teilweise geöffnet, sodass Wasserstoff über die Gasstrahlpumpe 15 durch den Anodenkreislauf strömen kann. Eventuell vorhandenes Wasser wird dabei ausgetragen und sammelt sich in dem Wasserabscheider 17. Da in dem Anodenkreislauf in jedem Fall auch eine gewisse Konzentration an Wasserstoff vorliegt, muss bei einem Öffnen des Ablassventils 18 damit gerechnet werden, dass es zu Wasserstoffemissionen in die Umgebung kommt. Aus diesem Grund ist es vorgesehen, dass über das Ablassventil abgelassene Volumen durch die Ablassleitung 19 in die Abluftleitung 7 einströmt und durch die dort befindliche Luft verdünnt wird. Um nun sicherzustellen, dass es zu keinen unerwünscht hohen Konzentrationen an Wasserstoff in der in die Umgebung strömenden Abluft kommt, ist es bei dem hier beschriebenen Abschaltverfahren vorgesehen, dass das Ablassventil 18 zyklisch geöffnet und geschlossen wird. Ein solches zyklisches Öffnen und Schließen hat dabei einerseits den Vorteil, dass sich Druckpulse aufbauen, welche zu einem sehr guten Austrag von Wasser insbesondere aus dem Bereich des Wasserabscheiders 17 und der Rezirkulationsleitung 16 führen.

Gleichzeitig wird nun die Öffnungsdauer in Abhängigkeit der geförderten Luftmasse der Luftfördereinrichtung 4 so eingestellt, dass in jedem Fall garantiert werden kann, dass die geförderte Luftmasse ausreicht, um den maximal zu erwartenden abgelassenen Wasserstoff soweit zu verdünnen, dass es in der Umgebung zu keinen kritischen Wasserstoffemissionen kommt. Dies führt dann in der Praxis dazu, dass bei höherer Luftmasse eine längere Öffnungsdauer des Ablassventils 18 zugelassen wird, als bei kleinerer Luftmasse. In jedem Fall kann so sichergestellt werden, dass während der Abschaltprozedur die maximale Öffnungszeit des Ablassventils 18, welche bei der geförderten Luftmasse möglich ist, erreicht wird. Durch diese maximale Öffnungszeit wird der maximal mögliche Austrag an Wasser aus der Anodenseite gewährleistet und gleichzeitig kann die maximale Menge an unerwünschten inerten Gasen aus der Anodenseite ausgetragen werden. Im Ergebnis steht dann eine Anodenseite zur Verfügung, welche so gut wie möglich ausgetrocknet ist, und welche die höchstmögliche Wasserstoffkonzentration im gesamten Anodenkreislauf aufweist. Hierdurch wird eine sehr gute H2-Protection-Time erreicht und gleichzeitig die Gefahr eines Einfrierens der Anodenseite der Brennstoffzelle 3 minimiert.

Durch eine konstante Drehzahl der Luftfördereinrichtung 4 können außerdem die Lärmemissionen minimiert und die in das System eingetragenen Vibrationen gegenüber einem dynamischen Betrieb der Luftfördereinrichtung 4 verringert werden.

Das Verfahren eignet sich insbesondere für die Anwendung in einem Brennstoffzellensystem 2 in einem Fahrzeug 1, da hier ein sehr häufiges Abstellen und Wiederstarten des Brennstoffzellensystems 2, insbesondere auch unter widrigen Umgebungsbedingungen, wie beispielsweise Temperaturen unterhalb des Gefrierpunkts, vorkommt. Grundsätzlich lässt sich das Verfahren jedoch auch bei Brennstoffzellensystemen außerhalb eines Fahrzeugs anwenden.

## Patentansprüche

1. Verfahren zum Spülen eines Brennstoffzellensystems (2), bei einem Abschaltvorgang, wobei über eine Luftfördereinrichtung (4) Luft gefördert und durch und/oder um einen Kathodenraum (6) einer Brennstoffzelle (3) gefördert und durch eine Abluftleitung (7) wieder abgeblasen wird,
wobei eine Anodenablassleitung (19) über ein Ablassventil (18) mit der Abluftleitung (7) verbunden ist,
**dadurch gekennzeichnet, dass**
das Ablassventil (18) während des Abschaltvorgangs zyklisch geschlossen und geöffnet wird, wobei die Öffnungsdauer von der geförderten Luftmenge abhängt und die geförderte Luftmenge zumindest teilweise durch einen Systembypass von der Druckseite der Luftfördereinrichtung (4) direkt zur Abluftleitung (7) geführt wird.

2. Verfahren nach Anspruch 1,
**dadurch gekennzeichnet, dass**
bei größerer geförderter Luftmenge die Öffnungsdauer verlängert und bei kleinerer geförderter Luftmenge die Öffnungsdauer verkürzt wird.

3. Verfahren nach Anspruch 1 oder 2,
**dadurch gekennzeichnet, dass**
die Luftfördereinrichtung (4) während des Abschaltvorgangs mit konstanter Drehzahl betrieben wird.

4. Verfahren nach einem der Ansprüche 1 bis 3,
**dadurch gekennzeichnet, dass**
Abgas aus einem Anodenraum (12) der Brennstoffzelle (3) über eine Rezirkulationsleitung (16) und eine Rezirkulationsfördereinrichtung (15) zum Anodenraum (12) zurückgeführt wird.

5. Verfahren nach Anspruch 4,
**dadurch gekennzeichnet, dass**
die Anodenablassleitung (19) an der im bestimmungsgemäßen Einsatz tiefsten Stelle der Anodenseite abzweigt.

6. Verfahren nach Anspruch 4 oder 5,
**dadurch gekennzeichnet, dass**
im Bereich der Abzweigung der Anodenablassleitung (19) auf der Anodenseite ein Wasserabscheider (17) angeordnet wird.

7. Verfahren nach einem der Ansprüche 1 bis 6,
**dadurch gekennzeichnet, dass**
die Luftfördereinrichtung (4) als Strömungsverdichter ausgebildet ist.

8. Verfahren nach Anspruch 7,
**dadurch gekennzeichnet, dass**
die Luftfördereinrichtung (4) mit wenigstens einer Abluftturbine (8) und wenigstens einer elektrischen Maschine (11) in Wirkverbindung steht.

9. Verfahren nach einem der Ansprüche 1 bis 8,
**dadurch gekennzeichnet, dass**
das Brennstoffzellensystem (2) im regulären Betrieb zur Bereitstellung von Antriebsleistung in einem Fahrzeug (1) eingesetzt wird.

## Claims

1. Method for purging a fuel cell system (2) in a switch-off process, wherein air is conveyed via an air conveying device (4) and conveyed through and/or around a cathode compartment (6) of a fuel cell (3) and blown out again through an exhaust air line (7),
wherein an anode outlet line (19) is connected to the exhaust air line (7) via an outlet valve (18),
**characterised in that**
the outlet valve (18) is cyclically closed and opened in the switch-off process, wherein the opening duration depends on the conveyed air quantity and the conveyed air quantity is at least partially directed through a system bypass from the pressure side of the air conveying device (4) directly to the exhaust air line (7).

2. Method according to claim 1,
**characterised in that**
the opening duration is extended at a larger conveyed air quantity and shortened at a smaller conveyed air quantity.

3. Method according to claim 1 or 2,
**characterised in that**
the air conveying device (4) is operated at a constant speed during the switch-off process.

4. Method according to any of claims 1 to 3,
**characterised in that**
exhaust gas from an anode compartment (12) of the fuel cell (3) is returned to the anode compartment (12) via a recirculation line (16) and a recirculation conveying device (15).

5. Method according to claim 4,
**characterised in that**
the anode outlet line (19) branches off at that point of the anode side which is the lowest in the intended application.

6. Method according to claim 4 or 5,
**characterised in that**
a water separator (17) is arranged in the region of the branch-off of the anode outlet line (19) on the anode side.

7. Method according to any of claims 1 to 6,
**characterised in that**
the air conveying device (4) is designed as a flow compressor.

8. Method according to claim 7,
**characterised in that**
the air conveying device (4) is in operative connection with at least one exhaust air turbine (8) and at least one electric machine (11).

9. Method according to any of claims 1 to 8,
**characterised in that**
the fuel cell system (2) is used in regular operation for providing drive power in a vehicle (1).

## Revendications

1. Procédé de purge d'un système de piles à combustibles (2), dans un processus d'arrêt, de l'air étant acheminé par un dispositif d'alimentation en air (4) et acheminé à travers et/ou autour d'un espace de cathode (6) d'une pile à combustible (3) et à nouveau soufflé par une conduite d'air sortant (7), une conduite de purge d'anode (19) étant reliée par une soupape de purge (18) à la conduite d'échappement (7), **caractérisé en ce que** la soupape de purge (18) étant fermée et ouverte pendant le processus d'arrêt, la durée d'ouverture variant en fonction de la quantité d'air acheminée, et la quantité d'air acheminée étant guidée au moins partiellement par une dérivation du système du côté pression du dispositif d'alimentation en air (4) directement dans la conduite d'échappement (7).

2. Procédé selon la revendication 1, **caractérisé en ce que**, si la quantité d'air a cheminé est plus importante, la durée d'ouverture est rallongée et si la quantité d'air acheminé est moins importante, la durée d'ouverture est raccourcie.

3. Procédé selon la revendication 1 ou la revendication 2, **caractérisé en ce que** le dispositif d'alimentation en air (4) fonctionne à une vitesse constante pendant le processus d'arrêt.

4. Procédé selon l'une quelconque des revendications 1 à 3, **caractérisé en ce que** le gaz d'échappement provenant d'un espace d'anode (12) de la pile à combustible (3) est reconduit par une conduite de recirculation (16) et un dispositif de recirculation (15) vers l'espace d'anode (12).

5. Procédé selon la revendication 4, **caractérisé en ce que** la conduite de purge d'anode (19) est bifurquée à un endroit le plus profond dans une utilisation conforme.

6. Procédé selon la revendication 4 ou la revendication 5, **caractérisé en ce que** dans la zone de la bifurcation de la conduite de purge d'anode (19) est disposé un séparateur d'eau (17) sur le côté d'anode.

7. Procédé selon l'une quelconque des revendications 1 à 6, **caractérisé en ce que** le dispositif d'alimentation en air (4) est conçu sous la forme d'un compresseur à écoulement.

8. Procédé selon la revendication 7, **caractérisé en ce que** le dispositif d'alimentation en air (4) coopérant avec au moins une turbine d'échappement (8) et au moins une machine électrique (11).

9. Procédé selon l'une quelconque des revendications 1 à 8, **caractérisé en ce que** le système de pile à combustible (2) dans le fonctionnement régulier est utilisé pour produire la puissance de propulsion dans un véhicule automobile (1).
